# NEW EUROPEAN PATENT SPECIFICATION

(11) **EP 2 104 240 B2**
(45) Date of publication and mention of the opposition decision: **20.04.2016**
(45) Mention of the grant of the patent: 28.12.2011
(21) Application number: 08250906.8
(22) Date of filing: 17.03.2008
(51) Int. Cl.: H04B 3/54

(54) **Digital control of electronic ballasts using AC power lines as a communication medium**
Digitale Steuerung elektronischer Vorschaltgeräte mittels AC-Netzleitungen als Kommunikationsmedium
Contrôle numérique de ballasts électroniques utilisant des lignes électriques CA comme support de communication

(43) Date of publication of application: 23.09.2009
(73) Proprietor: Universal Lighting Technologies, Inc., Nashville, Tennessee 37214-3683 (US)
(72) Inventor: Bell, Brett, Scotboro Alabama 35769 (US); Dernovsek, John Jay, Madison Alabama 35758 (US); Shet, Deepak, Schaumberg Illinois 60173 (US)
(74) Representative: Davies, Gregory Mark

(56) References cited:
- EP-A- 1 134 910
- WO-A-99/38363

## Description

### BACKGROUND OF THE INVENTION

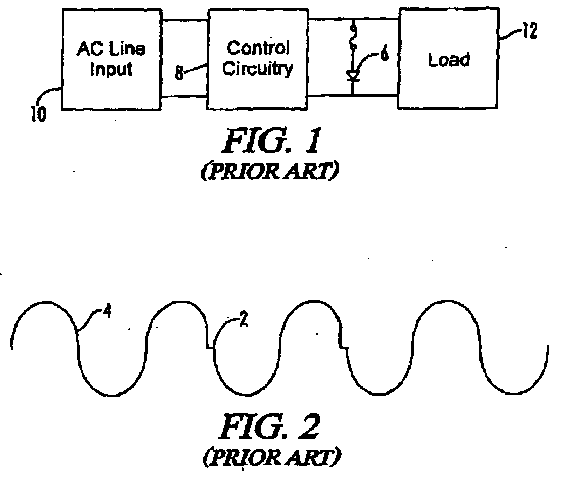

There are variety of methods of communicating over power lines known in the prior art. These prior art efforts to communicate across power lines range from simply applying a disturbance to a power line once per power cycle to communicating on a high frequency carrier on the power line. Although many of these communication schemes are functional, they suffer from a number of technical and economical drawbacks that make then unsuited for actual use. For example, U.S. Patient No. 4,348,582 proposes the power line communication system depicted in the circuit in FIG. 1. To generate a notch 2 in the power signal 4 on the AC line 10, a silicon controlled rectifier 6 (SCR) controlled by a set of control circuitry 8 is gated for a short time, approximately 1 millisecond, before the AC voltage crosses zero from positive to negative- While the SCR 6 is conducting, the voltage applied to the load 12 remains near zero. This creates a notch 2 in the AC power signal 4 as shown in FIG. 2 that is being provided to a load 12. A receiver circuit in the load 12 detects the presence or absence of notches and interprets them as digital data.
Another power line communication system is disclosed by EP-A-1134 910.

There are several disadvantages to the above described approach. First, the transmission rate is only 60 bits per second since the notch can only be introduced on the positive to negative half cycle. The SCR cannot be turned off by its gate signal. Thus, if the SCR is turned on just after a zero crossing, the line will be shorted through the SCR for a half cycle of the power signal which in turn will open the fuse and immediately eliminate the circuit's ability to function.

Therefore, what is needed is a new and improved method of using AC power lines as a communication medium.

Electronic ballasts are typically low cost products that are produced and purchased in relatively large numbers. Therefore, it is also important that any power line communication system for use with electronic ballasts not dramatically increase the cost of the individual ballasts.

An embodiment of the present invention is directed toward a system for providing communications between a central controller and at least one electronic ballast using an AC power line as a communication medium. The system includes:
a rectifier connected to an AC line input for rectifying the AC power line signal on the AC power line to produce a rectified power line signal;
a switch device connected to the AC power line so that activating the switch device shorts the AC power line; and
control circuitry connected to the rectifier and adapted to activate the switch device whenever the rectified power line signal reaches a reference voltage thereby creating a notch in the AC power line signal;
wherein the rectifier, switch device and control circuitry function as notch generating circuitry; and
wherein an isolation inductor is positioned between the AC line input and the notch generating circuitry for preventing notches generated in the AC power line signal from propagating up the AC power line to the AC line input.

The control circuitry includes a phase detection circuit for monitoring an output of the bridge rectifier and determining when to activate the shorting member based thereon. The shorting member is preferably a MOSFET. A receiver in the electronic ballast detects the short circuit condition. A dimming function of the electronic ballasts is controlled based upon a number of short circuit conditions detected by the receiver. The short circuit condition is preferably only created when the AC power line signal has a voltage potential that is less than 10 % of a maximum voltage potential of the power line signal or immediately prior to a zero crossing by the AC power line signal.

Another embodiment of the present invention is directed toward an apparatus for enabling communications between an electronic ballast controller and at least one electronic ballast over an AC power line having an AC power signal that is supplying power to the at least one electronic ballast. The apparatus includes a controller configured to selectively short the AC power line approximately when the AC power signal is changing from a negative to a positive polarity or from a positive polarity to a negative polarity to create an extended zero crossing. Preferably, a MOSFET is used to selectively short the AC power line and create the extended zero crossing. The controller includes a bridge rectifier for rectifying the AC power signal and a phase detection circuit for monitoring the output of the bridge rectifier to determine when to short the AC power line. The AC power line is preferably shorted immediately prior to a change in polarity of the AC power signal. A receiver positioned in the at least one ballast is configured to detect the presence or absence of an extended zero crossing when the power line signal changes polarity. The presence or absence of the extended zero crossings is used by the ballasts to control a dimming function of the ballasts.

Yet another embodiment of the present invention is directed toward a method of enabling communications between a controller and at least one electronic ballast on an AC power line supplying power to the at least one electronic ballast. In accordance with the method, the controller is used to selectively extend a zero crossing that occurs when a power signal on the AC power line either transitions from a positive to a negative polarity or from a negative to a positive polarity. The power signal is rectified and the rectified power signal is used to control production of the zero crossing extensions. The zero crossing extensions are created by selectively shorting the AC power line. The selective shorting occurs immediately prior to a change in polarity of the AC power signal. The AC power line is preferably shorted with a MOSFET. The presence or absence of a zero crossing extension when the power line signal changes polarity is detected with the at least one electronic ballast. The presence or absence of the zero crossing extensions is interpreted in accordance with a predetermined code to thereby enable communications between the controller and the at least one electronic ballast. A rectifier, switch device and control circuitry function as notch generating circuitry. The zero crossing extension generated in the power line signal is prevented from propagating up the AC power line to an AC power line input by use of an isolation inductor positioned between the AC line input and the notch generating circuitry.

Preferably, the zero crossing extensions are used to communicate a desired dimming amount to the at least one electronic ballast. In such an embodiment, a ratio between extended zero crossings and non-extended zero-crossings is used to communicate information from the controller to the at least one electronic ballast.

### BRIEF DESCRIPTION OF THE SEVERAL VIEWS OF THE DRAWINGS

Fig. 1 is a prior art circuit for generating a notch in an AC power signal;
Fig. 2 is a prior art power line communication signal having notches on the positive to negative transitions of the AC power signal;
Fig. 3 is a circuit diagram of an embodiment of the present invention;
Fig. 4 is a graph of the output of the bridge rectifier of a power line communication circuit constructed in accordance with an embodiment of the present invention; and
Fig. 5 is a graph of a voltage waveform created by a power line communication circuit constructed in accordance with an embodiment of the present invention.

### DETAILED DESCRIPTION OF THE INVENTION

The present invention is directed toward a power line communication system for providing communication capabilities between a control module and at least one electronic ballast. More particularly, a preferred embodiment of the present invention is directed toward enabling communications between a central controller and a set of electronic dimming ballasts being operated in accordance with an energy management system. These communications are enabled by a power line communication controller that transmits digital data across the AC power lines of a lighting branch circuit and electronic ballasts that filter the data from the AC power supply signal. Since the ratio of ballasts to controllers in a power line communication system is preferably in the range of 20/1 up to 60/1 and cost is a major factor in the marketability of such a system, the preferred system induces a disturbance on the power line that is easily detected with relatively inexpensive circuitry. Embodiments of the present invention also provide an efficient communication protocol that translates the transmitted data into dimming data for the ballasts.

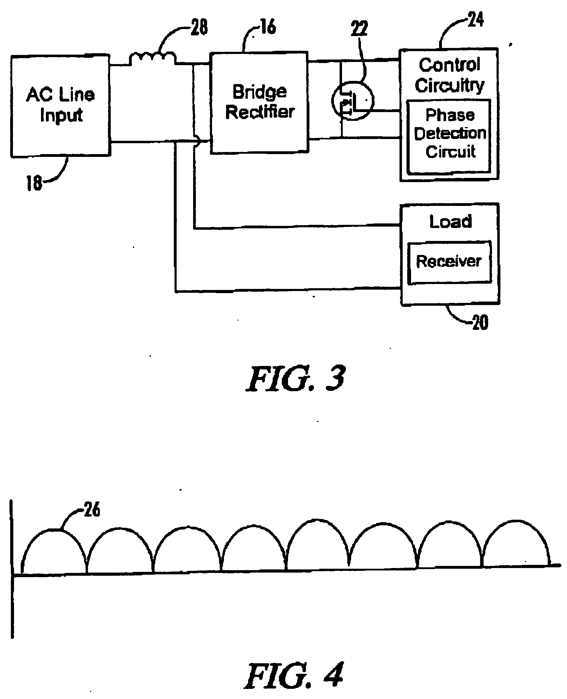

Referring now to FIG. 3, a power line communication circuit in accordance with the present invention is shown. The circuit consists of a bridge rectifier 16 connected to an AC line input 18 that is supplying a load 20. A MOSFET 22 that is controlled by a set of control circuitry 24 is used to produce a notch in the power signal. In particular, the notch for the power line communication system is induced on the line in the following manner. The control circuitry 24 contains a phase detection circuit that monitors the output voltage 26 of the bridge rectifier 16, as shown in FIG. 4. When the rectified voltage 26 nears the zero-voltage crossing, the MOSFET 22 is turned on. The MOSFET 22 remains on until the current though it returns to zero. While the MOSFET 22 is conducting, the supply voltage to the load 20 is held at near zero. This creates the desired extended zero-voltage crossing or notch that is used to digitally transmit information along the power line. The circuit of FIG. 3 allows transmission of a bit of information every half cycle of the AC waveform. Thus, a sixty Hertz standard power signal can be used to transmit 120 bits per second of data.

An isolation inductor 28 is preferably positioned between the AC line input 18 and the notch generating circuitry 16, 22 and 24. The isolation inductor 28 prevents any notches generated in the power signal being supplied to the load 20 from propagating up the power lines to the AC line input 18 and, thereby, creating disturbances on unintended branches of the power grid. The inductor 28 also allows several different communication systems to be established that are independent and isolated from one another.

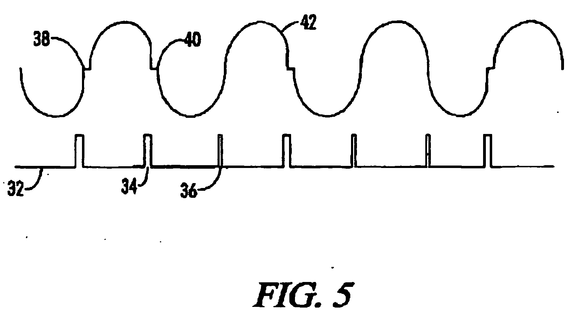

The bottom waveform 32 of FIG. 5 is the output voltage waveform of a detection circuit constructed in accordance with an embodiment of the present invention showing the notched disturbance on both the rising 38 and falling 40 edge of the AC power line voltage 42. The use of the MOSFET allows control of both the turning-on and turning-off of the notch generating circuit. The detection circuits in the receivers interpret the notches as a series of pulses 32 whose width determines whether the pulse represents a notch 34 or a non-notch 36. Preferably, a wider pulse 34 corresponds to the presence of a notch and a narrower pulse 36 corresponds to the absence of a notch.

In an embodiment of the present invention directed toward an electronic dimming ballast system, each of the ballasts has a detection circuit that monitors the AC power supply signal for the presence or absence of the power line communication system induced notches. A micro controller in the ballasts then measures the widths of the pulses and determines if a notch is present or not. Those skilled in the art will appreciate that there are an infinite number of ways in which the series of pulses could be decoded and converted into digital data. In an especially preferred embodiment of the present invention, the ratio of notches to non-notches corresponds to the desired brightness level of the electronic dimming ballasts. For example, if no notches are transmitted, each of the ballasts on the branch circuit receiving the notch based communications is set to full brightness. If a notch is induced on every half cycle, each of the ballasts is set to full dim. If every other half cycle has a notch, the ballasts are set to 50% brightness.

The embodiments of the present invention described herein above provide several improvements upon the prior art. First, the use of the bridge rectifier allows notch generation on every half cycle thus allowing 120 bits per second of data transmission, twice the rate of prior art circuits. Second, the use of a MOSFET as the shorting semiconductor device in the power line communication circuits, provides the ability to control both turn-on and turn-off of the shorting device thereby preventing potentially damaging short circuit conditions from occurring. Third, the use of an isolation inductor allows for the use of a power line communication circuit on each branch of a circuit without the induced notches disrupting the supply voltage supplies to the other branches.

Thus, although there have been described particular embodiment of the present invention of a new and useful Digital Control of Electronic Ballasts Using AC Power Lines as a Communication Medium, it is not intended that such references be construed as limitations upon the scope of this invention except as set forth in the following claims.

## Claims

1. A system for creating notches in an AC power line signal propagating over an AC power line in order to communicate over the AC power line, the system comprising:
a rectifier connected to an AC line input for rectifying the AC power line signal on the AC power line to produce a rectified power line signal;
a switch device connected to the AC power line so that activating the switch device shorts the AC power line; and
control circuitry connected to the rectifier and adapted to activate the switch device whenever the rectified power line signal reaches a reference voltage thereby creating a notch in the AC power line signal,
wherein the rectifier, switch device and control circuitry function as notch generating circuitry; and
wherein an isolation inductor is positioned between the AC line input and the notch generating circuitry for preventing notches generated in the AC power line signal from propagating up the AC power line to the AC line input.

2. The system of claim 1, further comprising at least one electronic ballast connected to the AC power line wherein a dimming function of the electronic ballast is controlled by the notches in the AC power line signal.

3. The system of claim 1 wherein said control circuitry further comprises a phase detection circuit for monitoring the rectified signal to determine when the rectified signal reaches the reference voltage.

4. The system of claim 3, further comprising a rectifier connected to the phase detection circuit so that the phase detection circuit can determine a change in polarity in the power signal.

5. The system of claim 1, further comprising:
AC input terminals for receiving the AC power line signal;
load output terminals for delivering the AC power line signal to the load;
a first circuit path coupled to the AC input terminals and having the rectifier, the switch, and the control circuitry; and
a second circuit path coupled to the AC input terminals and to the load output terminals.

6. The system of claim 1 wherein the system further comprises a receiver for detecting notches in the AC power signal.

7. The system of claim 1 wherein said switch device is a MOSFET.

8. The system of claim 1 wherein the reference voltage is less than 10 % of a maximum voltage potential of said power line signal.

9. The system of claim 1 wherein the rectified signal reaches the reference voltage immediately prior to a zero crossing by said power line signal.

10. A method of enabling communications between a controller and at least one electronic ballast on an AC power line supplying power to said at least one electronic ballast, said method comprising:
rectifying an AC power signal on the AC power line thereby creating a rectified power line signal;
sending the rectified power line signal to the controller which can activate a switch which shorts the AC power line;
using said controller to activate the switch whenever the rectified power line signal approaches a zero crossing for the rectified power line signal thereby extending a zero crossing that occurs when the AC power signal on said AC power line either transitions from a positive to a negative polarity or from a negative to a positive polarity;
detecting a presence or absence of a zero crossing extension when said AC power line signal changes polarity with said at least one electronic ballast and interpreting said presence or absence of said zero crossing extensions in accordance with a predetermined code to thereby enable communications between said controller and said at least one electronic ballast,
wherein a rectifier, switch device and control circuitry function as notch generating circuitry; and
whereby the zero crossing extension generated in the power line signal is prevented from propagating up the AC power line to an AC power line input by use of an isolation inductor positioned between the AC line input and the notch generating circuitry.

11. The method of claim 10 wherein said zero crossing extensions are created by selectively shorting said AC power line.

12. The method of claim 11 wherein said selective shorting occurs immediately prior to a change in polarity of said AC power signal.

13. The method of claim 10 further comprising using said zero crossing extensions o communicate a desired dimming amount to said at least one electronic ballast.

14. The method of claim 10 wherein selectively extending said zero crossing further comprises shorting said AC power line with a MOSFET.

15. The method of claim 10 further comprising using a ratio between extended zero crossings and non-extended zero-crossings to communicate information from said controller to said at least one electronic ballast.

## Patentansprüche

1. System zum Erzeugen von Kerben in einem Wechselstromnetzleitungssignal, welches über eine Wechselstromnetzleitung übertragen wird, um über die Wechselstromnetzleitung zu kommunizieren, wobei das System umfasst:
einen mit einem Wechselstromleitungseingang verbundenen Gleichrichter zum Gleichrichten des Wechselstromnetzleitungssignals der Wechselstromnetzleitung, um ein gleichgerichtetes Stromleitungssignal zu erzeugen;
eine Umschalteinrichtung, die so mit der Wechselstromnetzleitung verbunden ist, dass die Aktivierung der Umschalteinrichtung die Wechselstromnetzleitung kurzschließt; und
einen Steuerschaltkreis, der mit dem Gleichrichter verbunden ist und zum Aktivieren der Umschalteinrichtung geeignet ist, wann immer das gleichgerichtete Stromleitungssignal eine Referenzspannung erreicht, wodurch eine Kerbe in dem Wechselstromnetzleitungssignal erzeugt wird,
wobei der Gleichrichter, die Umschalteinrichtung und der Steuerschaltkreis als Kerbenerzeugungsschaltkreis fungieren und
wobei eine Trennspule zwischen dem Wechselstromleitungseingang und dem Kerbenerzeugungsschaltkreis angeordnet ist, um zu verhindern, dass Kerben in dem Wechselstromnetzleitungssignal die Wechselstromnetzleitung hoch zum Wechselstromleitungseingang übertragen werden.

2. System nach Anspruch 1, weiterhin umfassend wenigstens ein mit der Wechselstromnetzleitung verbundenes elektronisches Vorschaltgerät, wobei eine Dimmfunktion des elektronischen Vorschaltgerätes durch die Kerben in dem Wechselstromnetzleitungssignal gesteuert wird.

3. System nach Anspruch 1, wobei der Steuerschaltkreis weiterhin einen Phasenerkennungsschaltkreis zum Überwachen des gleichgerichteten Signals aufweist, um zu bestimmen, wann das gleichgerichtete Signal die Referenzspannung erreicht.

4. System nach Anspruch 3, weiterhin umfassend einen Gleichrichter, der mit dem Phasenerkennungsschaltkreis verbunden ist, so dass der Phasenerkennungskreis einen Polaritätswechsel in dem Stromsignal bestimmen kann.

5. System nach Anspruch 1, weiterhin umfassend:
Wechselstromeingangsanschlüsse zum Empfangen des Wechselstromnetzleitungssignals;
Ausgangslastanschlüsse zum Versorgen der Last mit dem Wechselstromnetzleitungssignal;
eine erste Leiterbahn, die an die Wechselstromeingangsanschlüsse gekoppelt ist und die den Gleichrichter, den Schalter und den Steuerschaltkreis aufweist; und
eine zweite an die Wechselstromeingangsanschlüsse und die Ausgangslastanschlüsse gekoppelte Leiterbahn.

6. System nach Anspruch 1, wobei das System weiterhin einen Empfänger zur Erfassung von Kerben in dem Wechselstromnetzsignal umfasst.

7. System nach Anspruch 1, wobei die Umschalteinrichtung ein MOSFET ist.

8. System nach Anspruch 1, wobei die Referenzspannung kleiner als 10% eines maximalen Spannungspotenzials des Stromleitungssignals ist.

9. System nach Anspruch 1, wobei das gleichgerichtete Signal die Referenzspannung kurz vor einem Null-Durchgang des Stromleitungssignals erreicht.

10. Verfahren zum Ermöglichen von Kommunikationen zwischen einem Regler und wenigstens einem elektronischen Vorschaltgerät in einer Wechselstromnetzleitung, welche dem wenigstens einen elektronischen Vorschaltgerät Strom liefert, wobei das Verfahren umfasst:
Gleichrichten eines Wechselstromsignals in einer Wechselstromnetzleitung, wodurch ein gleichgerichtetes Stromleitungssignal erzeugt wird;
Senden des gleichgerichteten Stromleitungssignals dem Regler, welcher einen Schalter aktivieren kann, der die Wechselstromnetzleitung kurzschließt;
Verwenden des Reglers, um den Schalter immer dann zu aktivieren, wenn das gleichgerichtete Stromleitungssignal einem Null-Durchgang des gleichgerichteten Stromleitungssignals nahekommt, um einen Null-Durchgang zu erweitern, der auftritt, wenn das Wechselstromnetzsignal der Wechselstromnetzleitung entweder von einer positiven zu einer negativen Polarität oder von einer negativen zu einer positiven Polarität wechselt;
Erfassen eines Vorhandenseins oder Nichtvorhandenseins einer Null-Durchgangs-Erweiterung, mit dem wenigstens einen elektronischen Vorschaltgerät, wenn das Wechselstromnetzleitungssignal die Polarität wechselt und Interpretieren des Vorhandenseins oder Nichtvorhandenseins der Null-Durchgangs-Erweiterung entsprechend eines vorbestimmten Codes um dadurch Kommunikation zwischen dem Regler und dem wenigsten einen elektronischen Vorschaltgerät zu ermöglichen,
wobei ein Gleichrichter, eine Umschalteinrichtung und ein Steuerschaltkreis als Kerbenerzeugungsschaltkreis fungieren und
wodurch die in dem Stromleitungssignal erzeugte Null-Durchgangs-Erweiterung durch die Verwendung einer zwischen dem Wechselstromleitungseingang und dem Kerbenerzeugungsschaltkreis angeordneten Trennspule davon abgehalten wird, über die Wechselstromnetzleitung an einen Wechselstromnetzleitungseingang übertragen zu werden.

11. Verfahren nach Anspruch 10, wobei die Null-Durchgangs-Erweiterung durch wahlweises Kurzschließen der Wechselstromleitung erzeugt werden.

12. Verfahren nach Anspruch 11, wobei das wahlweise Kurzschließen kurz vor einem Polaritätswechsel des Wechselstromsignals auftritt.

13. Verfahren nach Anspruch 10 weiterhin umfassend die Verwendung der Null-Durchgangs-Erweiterung um einen gewünschten Dimmwert dem wenigstens einen elektronischen Vorschaltgeräts zu kommunizieren.

14. Verfahren nach Anspruch 10, wobei das wahlweise Erweitern der Null-Durchgänge weiterhin das Kurzschließen der Wechselstromleitung mit einem MOSFET umfasst.

15. Verfahren nach Anspruch 10 weiterhin umfassend verwenden eines Verhältnisses zwischen erweiterten Null-Durchgängen und nicht erweiterten Null-Durchgängen, um Informationen von dem Regler zu dem wenigstens einen elektronischen Vorschaltgerät zu kommunizieren.

## Revendications

1. Système pour créer des encoches dans un signal de lignes électriques CA se propageant sur une ligne électrique CA de manière à communiquer sur une ligne électrique CA, le système comprenant :
un redresseur connecté à une entrée de ligne CA pour redresser un signal de ligne électrique CA sur la ligne électrique CA pour produire un signal de ligne électrique redressé ;
un dispositif commutateur connecté à la ligne électrique CA de manière à activer le dispositif commutateur pour court-circuiter la ligne électrique CA ; et
une circuiterie de commande connectée au redresseur et adaptée pour activer le dispositif commutateur chaque fois que le signal de ligne électrique redressé atteint une tension de référence en créant ainsi une encoche dans le signal de ligne électrique CA ;
dans lequel le redresseur, le dispositif commutateur et la circuiterie de commande font fonction de circuiterie de génération d'encoches ; et
dans lequel une inductance d'isolation est positionnée entre l'entrée de ligne CA et la circuiterie de génération d'encoches pour empêcher des encoches générées dans le signal de ligne électrique CA de se propager sur la ligne électrique CA vers l'entrée de ligne CA.

2. Système selon la revendication 1, comprenant en outre au moins un ballast électronique connecté à la ligne électrique CA, dans lequel une fonction de gradation du ballast électronique est commandée par les encoches dans le signal de ligne électrique CA.

3. Système selon la revendication 1, dans lequel ladite circuiterie de commande comprend en outre un circuit de détection de phase pour surveiller le signal redressé pour déterminer quand le signal redressé atteint la tension de référence.

4. Système selon la revendication 3, comprenant en outre un redresseur connecté au circuit de détection de phase de manière que le circuit de détection de phase puisse déterminer un changement de polarité dans le signal électrique.

5. Système selon la revendication 1, comprenant en outre :
des bornes d'entrée CA pour recevoir le signal de ligne électrique CA ;
des bornes de sortie de charge pour délivrer le signal de ligne électrique CA à la charge ;
un premier parcours de circuit couplé aux bornes d'entrée CA et comportant le redresseur, le commutateur et la circuiterie de commande ; et
un deuxième parcours de circuit couplé aux bornes d'entrée CA et aux bornes de sortie de charge.

6. Système selon la revendication 1, dans lequel le système comprend en outre un récepteur pour détecter des encoches dans le signal électrique CA.

7. Système selon la revendication 1, dans lequel ledit dispositif commutateur est un transistor à effet de champ à oxydes métalliques (MOSFET).

8. Système selon la revendication 1, dans lequel la tension de référence est inférieure à 10 % d'un potentiel maximum dudit signal de ligne électrique.

9. Système selon la revendication 1, dans lequel le signal redressé atteint la tension de référence immédiatement avant un passage à zéro par ledit signal de ligne électrique.

10. Procédé pour permettre des communications entre un contrôleur et au moins un ballast électronique sur une ligne électrique CA alimentant en énergie ledit au moins un ballast électronique, ledit procédé comprenant :
le redressement d'un signal électrique CA sur la ligne électrique CA en générant ainsi un signal de ligne électrique redressé ;
la transmission du signal de ligne électrique redressé au contrôleur qui peut activer un commutateur qui court-circuite la ligne électrique CA ;
l'utilisation dudit contrôleur pour activer le dispositif commutateur chaque fois que le signal de ligne électrique redressé s'approche d'un passage à zéro pour le signal de ligne électrique redressé en prolongeant ainsi un passage à zéro qui se produit quand le signal de ligne électrique CA sur ladite ligne électrique CA effectue une transition d'une polarité positive à négative ou d'une polarité négative à positive ;
la détection d'une présence ou d'une absence d'un prolongement de passage à zéro quand ledit signal de ligne électrique CA change de polarité avec ledit au moins un ballast électronique et l'interprétation de ladite présence ou absence desdits prolongements de passage à zéro en fonction d'un code prédéterminé pour permettre ainsi des communications entre ledit contrôleur et ledit au moins un ballast électronique,
dans lequel un redresseur, un dispositif commutateur et une circuiterie de commande font fonction de circuiterie de génération d'encoches ; et
le prolongement de passage à zéro généré dans le signal de ligne électrique est empêché de se propager sur la ligne électrique CA vers une entrée de ligne électrique CA par l'utilisation d'une inductance d'isolation positionnée entre l'entrée de ligne CA et la circuiterie de génération d'encoche.

11. Procédé selon la revendication 10, dans lequel lesdits prolongements de passage à zéro sont créés en court-circuitant sélectivement ladite ligne électrique CA.

12. Procédé selon la revendication 11, dans lequel ledit court-circuit sélectif se produit immédiatement avant un changement de polarité dudit signal électrique CA.

13. Procédé selon la revendication 10, comprenant en outre l'utilisation desdits prolongements de passage à zéro pour communiquer une quantité de gradation désirée audit au moins un ballast électronique.

14. Procédé selon la revendication 10, dans lequel le prolongement sélectif dudit passage à zéro comprend en outre le court-circuitage de ladite ligne électrique CA avec un transistor à effet de champ à oxydes métalliques (MOSFET).

15. Procédé selon la revendication 10, comprenant en outre l'utilisation d'un rapport entre des passages à zéro prolongés et des passages à zéro non prolongés pour communiquer des informations dudit contrôleur audit au moins un ballast électronique.
